Europäisches Patentamt

European Patent Office

Office européen des brevets

(11) Numéro de publication : **0 300 889 B1**

## FASCICULE DE BREVET EUROPEEN

(45) Date de publication du fascicule du brevet :
**12.06.91 Bulletin 91/24**

(51) Int. Cl.$^5$ : **B62D 25/06, B60R 13/02**

(21) Numéro de dépôt : **88401857.3**

(22) Date de dépôt : **18.07.88**

(54) Ensemble pavillon pour véhicule automobile.

(30) Priorité : **20.07.87 FR 8710229**

(43) Date de publication de la demande :
**25.01.89 Bulletin 89/04**

(45) Mention de la délivrance du brevet :
**12.06.91 Bulletin 91/24**

(84) Etats contractants désignés :
**DE GB IT**

(56) Documents cités :
**EP-A- 0 203 484**
**DE-A- 1 430 934**
**DE-A- 1 655 649**
**FR-A- 1 470 561**
**FR-A- 2 520 319**
**US-A- 3 446 528**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Dossin, Jacques**
**4 rue d'Alma**
**F-92400 Courbevoie (FR)**

(74) Mandataire : **Durand, Yves Armand Louis et al**
**CABINET WEINSTEIN 20, Avenue de**
**Friedland**
**F-75008 Paris (FR)**

Jouve, 18, rue Saint-Denis, 75001 PARIS

## Description

La présente invention a essentiellement pour objet un véhicule automobile comportant un ensemble pavillon.

On connaît déjà, d'après par exemple le document EP-A-170086, un procédé de montage d'une garniture intérieure sous un toit de véhicule solidaire de la caisse, et cela par déplacement d'un bras portant la garniture qui est ainsi amenée sous le toit fixe et qui est montée sous ce toit.

Toutefois, étant donné que le toit est déjà solidaire du véhicule et ne comporte pas d'ouverture supérieure, on ne peut pas aménager l'habitacle du véhicule à l'aide de robots travaillant au-dessus de lui.

Par ailleurs, on connaît, d'après le document FR-A-2529844 un ensemble pavillon constitué d'un toit associé à une garniture intérieure qui comporte sur son contour des volets rabattables et fixés sous des éléments de structure de la caisse. Cependant, la conception de cet ensemble ne permet pas son montage par l'intérieur du véhicule, de sorte que ledit ensemble ne peut pas intégrer des éléments de la superstructure de la caisse. En outre, des accessoires ne peuvent pas être préalablement montés sur cet ensemble pavillon dans lequel, par ailleurs, il existe des zones où la garniture ne peut pas masquer complètement la structure de la caisse.

On connaît également, d'après le document EP-A-0 203 484, un ensemble pavillon pour véhicule tel que décrit dans le préambule de la revendication 1. Mais le toit du véhicule fait partie intégrante de la caisse, de sorte que ce toit ne peut pas intégrer des éléments de la superstruture de la caisse.

Aussi, la présente invention a pour but de remédier à ces inconvénients en proposant un ensemble pavillon capable d'intégrer certains éléments de structure de la caisse ainsi que des éléments d'équipement, et cela tout en conférant à l'ensemble d'excellentes qualités de rigidité et de solidité de montage ou de liaison avec la caisse.

A cet effet, l'invention a pour objet un véhicule automobile comportant un ensemble pavillon monté sur la caisse du véhicule en fin de ligne d'assemblage et constitué d'une première structure rigide formant toit et d'une deuxième structure souple formant garniture intérieure sous le toit, caractérisé en ce que la première structure formant toit comporte sur sa périphérie des parties en décrochement depuis ladite périphérie et s'étendant du côté du dessous du toit, ces parties étant susceptibles de s'appliquer sous des éléments solidaires de la caisse du véhicule en partie haute de cette caisse, et d'être fixées sous ces éléments par collage ou analogue.

Suivant une autre caractéristique de l'invention, la première structure précitée formant toit est munie de moyens de clippage de celle-ci sur les éléments de la caisse pour permettre ensuite le collage.

Selon encore une autre caractéristique, l'ensemble pavillon de cette invention comporte des éléments intégrés faisant partie de la structure de la caisse et/ou des éléments d'équipement du véhicule, avant montage de l'ensemble pavillon sur celui-ci.

On précisera ici que les éléments intégrés de la structure de la caisse peuvent être des traverses avant et/ou arrière, et/ou des ridelles verticales des arcs latéraux de la caisse.

Quant aux éléments d'équipement, ils sont constitués par des poignées de maintien susceptibles d'assurer le verrouillage de l'ensemble pavillon sur la caisse, et/ou par des consoles, et/ou par des faisceaux de câbles électriques interposés entre la première et la deuxième structure formant l'ensemble pavillon.

Cet ensemble pavillon est encore caractérisé par le fait que le toit et la garniture avec éventuellement les éléments d'équipement, sont en des matières plastiques co-moulées ou bi-injectées.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue schématique en perspective d'un véhicule équipé d'un ensemble pavillon conforme à cette invention ; et

Les figures 2, 3, 4, 5 et 6 sont des vues en coupe faites respectivement suivant les lignes II-II, III-III, IV-IV, V-V, et VI-VI, de la figure 1.

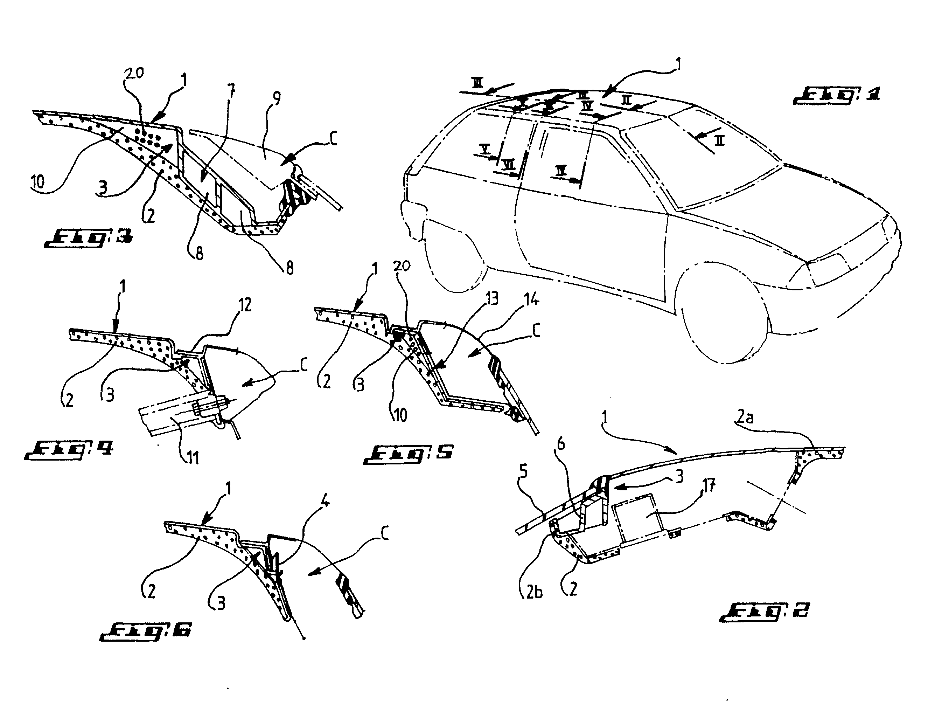

En se reportant aux figures, on voit qu'un ensemble pavillon conforme à cette invention comprend essentiellement une première structure rigide formant toit 1 et une deuxième structure souple 2 formant garniture intérieure sous le toit 1, ladite première structure ou toit comportant, comme on le voit bien sur les figures 2 à 6, des parties en décrochement 3 susceptibles de s'appliquer sous des éléments de la caisse du véhicule pour être collées sur et sous lesdits éléments.

Comme on le voit sur la figure 6, des moyens de clippage 4 peuvent être prévus pour assurer le maintien du toit 1 sur les éléments de caisse C, afin de permettre la polymérisation de la colle.

En se reportant maintenant à la figure 2 sur laquelle on a montré en 5 le pare-brise, on voit que la structure rigide formant toit 1 comporte une traverse avant 6 de pavillon qui est intégrée à ladite structure rigide. Le pare-brise 5 recouvre la traverse 6. Par ailleurs, on a montré en 17 sur la figure 2 un élément d'équipement constitué par une console intégrée à l'ensemble pavillon constitué par le toit 1 et la garniture 2 et portant des moyens quelconques formant cadran ou autre pour le conducteur du véhicule. La garniture 2 est collée au toit 1 comme on le voit en 2a. et, à l'avant, elle est collée sur la traverse 6, comme on le voit en 2b.

Sur la figure 3, on voit que le toit 1 comporte, à l'arrière et au niveau de la partie en décrochement 3 une traverse arrière 7 de pavillon. Cette traverse 7, un peu comme la traverse avant 6, est réalisée par des rainures de renforcement 8. On a montré en 9 un volet arrière faisant partie de la caisse C du véhicule et recouvrant la traverse arrière 7 de façon à réaliser une continuité avec la paroi rigide formant toit 1.

Entre cette paroi rigide et la garniture 2 collée sur elle, un logement 10 peut être laissé pour permettre le passage d'un faisceau de câbles électriques 20.

En se reportant à la figure 4, on voit que la structure rigide 1 formant toit porte une poignée 11 permettant de maintenir l'ensemble pavillon et éventuellement de le fixer sur la caisse C. Mais, comme on l'a dit précédemment, et comme on le voit bien sur la figure 4, le toit 1 forme une partie en décrochement 3 qui est collée sur le dessous des éléments de caisse C, comme on le voit en 12.

Sur la figure 5, on voit que la paroi rigide formant toit 1 intègre les ridelles verticales 13 des arcs latéraux 14 de pavillon de caisse C.

Le toit 1 et la garniture 2 sont réalisés en des matières plastiques appropriées, par bi-injection, ou moulage simultané de deux matériaux dans un même moule. Ainsi, on obtient immédiatement un ensemble unitaire avec éventuellement des équipements, tels que des faisceaux de câbles électriques 20 interposés entre toit 1 et garniture 2.

Par ailleurs, on remarquera que l'intégration des traverses avant 6 et arrière 7 constitue déjà une partie de la superstructure de la caisse C, de sorte que le montage de l'ensemble pavillon sur la caisse C constitue un montage particulièrement rigide et solide.

La caisse présentant à sa partie supérieure un grand orifice pour le montage de l'ensemble pavillon, ce grand orifice peut être mis à profit pour permettre l'approche verticale des équipements intérieurs de l'habitacle du véhicule, tels que sièges, tapis, planche de bord etc.

Le montage de l'ensemble pavillon qui vient d'être décrit sur la caisse C se fait verticalement depuis le bas vers le haut après avoir introduit l'ensemble pavillon pré-assemblé au travers de la baie avant ou arrière du véhicule.

Comme on l'a expliqué précédemment, grâce aux parties en décrochement 3 sur le pourtour de la structure rigide en forme de toit 1, on applique l'ensemble pavillon sous les éléments de la caisse C faisant partie du véhicule, et on réalise un collage étanche, en s'aidant des moyens de clippage 4, le verrouillage pouvant être éventuellement complété à l'aide des poignées 11.

On a donc réalisé suivant l'invention un ensemble pavillon pré-assemblé, comportant de préférence des éléments intégrés faisant partie de la structure de la caisse, ainsi que des éléments divers d'équipement du véhicule, cet ensemble pavillon constituant un ensemble particulièrement facile à monter sur le véhicule tout en conférant à ce dernier d'excellentes qualités de rigidité au niveau de sa partie supérieure ou de toit.

Bien entendu, l'invention n'est nullement limitée au mode de réalisation décrit et illustré qui n'a été donné qu'à titre d'exemple.

## Revendications

1. Véhicule automobile comportant un ensemble pavillon monté sur la caisse du véhicule en fin de ligne d'assemblage et constitué d'une première structure rigide formant toit (1) et d'une deuxième structure souple (2) formant garniture intérieure sous le toit (1), caractérisé en ce que la première structure formant toit (1) comporte sur sa périphérie des parties (3) en décrochement depuis ladite périphérie et s'étendant du côté du dessous du toit (1), ces parties étant susceptibles de s'appliquer sous des éléments solidaires de la caisse (C) du véhicule en partie haute de cette caisse et d'être fixées sous ces éléments par collage ou analogue.

2. Véhicule selon la revendication 1, caractérisé en ce que la première structure formant toit (1) est munie de moyens de clippage (4) de celle-ci sur les éléments de la caisse (C) pour permettre le collage.

3. Véhicule selon la revendication 2, caractérisé en ce qu'il comporte des éléments intégrés faisant partie de la structure de la caisse (C) et/ou des éléments d'équipement du véhicule, avant montage de l'ensemble pavillon sur celui-ci.

4. Véhicule selon la revendication 3, caractérisé en ce que les éléments intégrés précités de la structure de la caisse sont des traverses avant (6) et/ou arrière (7), et/ou des ridelles verticales (13) des arcs latéraux (14) de la caisse (C).

5. Véhicule selon la revendication 3, caractérisé en ce que les éléments d'équipement précités sont constitués par des poignées (11) de maintien susceptibles d'assurer le verrouillage de l'ensemble pavillon sur la caisse (C), et/ou par des consoles (17) et/ou par des faisceaux de câbles électriques (20) interposés entre la première (1) et la deuxième structure (2) précitées.

6. Véhicule selon l'une des revendications 1 à 5, caractérisé en ce que le toit (1) et la garniture (2) avec éventuellement les éléments d'équipement sont en des matières plastiques co-moulées ou bi-injectées.

## Ansprüche

1. Kraftfahrzeug mit einer am Ende des Montagefliessbandes an dem Wagenkasten des Fahrzeugs angebrachten Dachgesamtheit bestehend aus einem ersten ein Dach bildenden starren Aufbaugefüge (1) und aus einem zweiten, einen inneren Belag unterhalb des Daches (1) bildenden nachgiebigen Aufbaugefüge (2), dadurch gekennzeichnet, dass das erste ein Dach bildende Aufbaugefüge (1) an seinem Umfang, von dem besagten Umfang ab abgesetzte und sich zur Unterseite des Daches (1) hin erstreckende Falzteile (3) aufweist, wobei diese Teile fähig sind, sich unter mit dem Wagenkasten des Fahrzeugs (C) fest verbundenen Elementen im oberen Bereich dieses Wagenkastens anzulegen und unterhalb dieser Elementen durch Kleben oder dergleichen befestigt zu werden.

2. Fahrzeug gemäss Anspruch 1, dadurch gekennzeichnet, dass das erste ein Dach bildende Aufbaugefüge (1) mit Mitteln (4) zum Aufklemmen desselben an die Elemente des Wagenkastens (C) versehen ist, um das Kleben zu gestatten.

3. Fahrzeug nach Anspruch 2, dadurch gekennzeichnet, dass es vor dem Anbringen der Dachgesamtheit an diesem, zu dem Aufbau des Wagenkastens (C) und/oder zu den Ausstattungselementen des Fahrzeugs gehörende, eingegliederte Elemente umfasst.

4. Fahrzeug nach Anspruch 3, dadurch gekennzeichnet, dass die vorgennanten eingegliederten Elemente des Aufbaues des Wagenkastens vordere Querbalken (6) und/ oder hintere Querbalken (7) und-/oder senkrechte Rungen (13) der Seitenspriegel (14) des Wagenkastens (C) sind.

5. Fahrzeug gemäss Anspruch 3, dadurch gekennzeichnet, dass die vorgenannten Ausstattungselemente durch Haltehandgriffe (11), die fähig sind, die Verriegelung der Dachgesamtheit auf den Wagenkasten (C) zu gewährleisten und/oder durch Auflager (17) und/oder durch zwischen dem ersten (1) und dem zweiten vorgenannten Aufbaugefüge (2) zwischengefügte elektrische Kabelsätze (20) gebildet werden.

6. Fahrzeug nach einem der Ansprüche 1 bis 5, dadurchgekennzeichnet, dass das Dach (1) und der Belag (2) gegebenenfalls zusammen mit den Ausstattungselementen aus zusammengegossenen bzw. doppelspritzgegossenen Kunststoffen bestehen.

## Claims

1. Automotive vehicle comprising a roof unit mounted onto the body of the vehicle at the end of the assembly line and consisting of a first rigid, roof-forming structure (1) and of a second flexible structure (2) forming an inner lining underneath the roof (1), characterized in that the first roof-forming structure (1) comprises on its periphery portions (3) set back from the said periphery and extending towards the inner side of the roof (1), these portions being susceptible of being applied below elements made fast to the body (C) of the vehicle at the upper part of this body and of being fastened underneath these elements by sticking or the like.

2. Vehicle according to claim 1, characterized in that the first roof-forming structure (1) is provided with means (4) for clipping the latter onto the elements of the body (C) for permitting the adhesive bonding.

3. Vehicle according to claim 2, characterized in that it comprises integrated elements forming part of the structure of the body (C) and/or of the elements fitting the vehicle before the mounting of the whole roof onto the latter.

4. Vehicle according to claim 3, characterized in that the aforesaid integrated elements of the structure of the body are front cross-members (6) and/or rear cross-members (7) and/or vertical stakes (13) of the side bows (14) of the body (C).

5. Vehicle according to claim 3, characterized in that the aforesaid fitting elements are constituted by holding grips (11) susceptible of providing for the locking of the roof unit onto the body (C) and/or by brackets (17) and/or by bundles of electric cables (20) interposed between the aforesaid first structure (1) and second structure (2).

6. Vehicle according to one of claims 1 to 5, characterized in that the roof (1) and the lining (2) possibly together with the fitting elements are made from co-moulded or bi-injected plastics materials.

Fig: 1

Fig: 2

Fig: 3

Fig: 4

Fig: 5

Fig: 6

EP 0 300 889 B1